Europäisches Patentamt

European Patent Office

Office européen des brevets

(19)

(11) **EP 0 891 532 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.⁷: **G01B 7/06**, G01B 121/02, G01B 101/00

(21) Anmeldenummer: **97949895.3**

(22) Anmeldetag: **08.11.1997**

(86) Internationale Anmeldenummer:
**PCT/DE1997/002615**

(87) Internationale Veröffentlichungsnummer:
**WO 1998/027400 (25.06.1998 Gazette 1998/25)**

(54) **VERFAHREN ZUR BESTIMMUNG EINER DICKE EINER SCHICHT AUS ELEKTRISCH LEITENDEM MATERIAL**

PROCESS FOR DETERMINING THE THICKNESS OF A LAYER OF ELECTROCONDUCTIVE MATERIAL

PROCEDE POUR DETERMINER L'EPAISSEUR D'UNE COUCHE DE MATERIAU ELECTROCONDUCTEUR

(84) Benannte Vertragsstaaten:
**CH DE ES FR GB IT LI SE**

(30) Priorität: **18.12.1996 DE 19652750**

(43) Veröffentlichungstag der Anmeldung:
**20.01.1999 Patentblatt 1999/03**

(73) Patentinhaber: **ROBERT BOSCH GMBH**
**70442 Stuttgart (DE)**

(72) Erfinder:
• **DOBLER, Klaus**
  **D-70839 Gerlingen (DE)**
• **HACHTEL, Hansjörg**
  **D-71287 Weissach (DE)**
• **DIMKE, Reinhard**
  **D-70195 Stuttgart (DE)**
• **AUF DER HEIDE, Franz**
  **D-96123 Litzendorf (DE)**
• **BLATTERT, Richard**
  **D-71711 Murr (DE)**
• **WEBER, Josef**
  **D-71739 Oberriexingen (DE)**

(56) Entgegenhaltungen:
| | |
|---|---|
| DE-A- 2 061 708 | DE-A- 3 404 720 |
| DE-A- 4 227 735 | DE-B- 1 237 335 |
| GB-A- 2 145 827 | US-A- 5 343 146 |

EP 0 891 532 B1

**Beschreibung**

Stand der Technik

Die Erfindung geht aus von einem Verfahren zur Bestimmung einer Dicke einer Schicht aus elektrisch leitendem Material, insbesondere einer Chromschicht. Bisher werden in der Praxis verchromte Teile zum Beispiel mit dem Röntgenfluoreszens-Verfahren gemessen. Dieses Verfahren ist aber teuer und zeitaufwendig. Auch wird die sogenannte Induktiv-Meßmethode angewandt. Hierbei sind aber auf der Oberfläche nur punktähnliche Messungen möglich, die für einen Einsatz in der Praxis eine sehr hohe Positioniergenauigkeit erfordern. Bei beiden Verfahren ist es aber relativ schwierig, auftretende Meßfehler zu eliminieren.

Vorteile der Erfindung

Das erfindungsgemäße Verfahren zur Bestimmung einer Dicke einer Schicht aus elektrisch leitendem Material mit den Merkmalen des unabhängigen Anspruchs hat demgegenüber den Vorteil, daß auftretende Meßfehler weitgehend eliminiert werden können.
Insbesondere in einer Massenproduktion hergestellte beschichtete Teile können in einem kontinuierlich durchlaufenden Meßverfahren überprüft werden. Eventuelle Schwankungen der stofflichen Beschaffenheit des Grundstoffes und zum Beispiel durch Verschmutzung bzw. Abrieb bewirkte Unterschiede des Abstandes zwischen der Meßspule und dem zu bestimmenden Meßobjekt können eliminiert werden. Dadurch ist eine sehr zuverlässige und eindeutige Aussage über die Dicke der zu bestimmenden Schicht möglich.
Durch die in den Unteransprüchen aufgeführten Maßnahmen sind vorteilhafte Weiterbildungen und Verbesserungen des im unabhängigen Anspruch angegebenen Verfahrens möglich.

Zeichnung

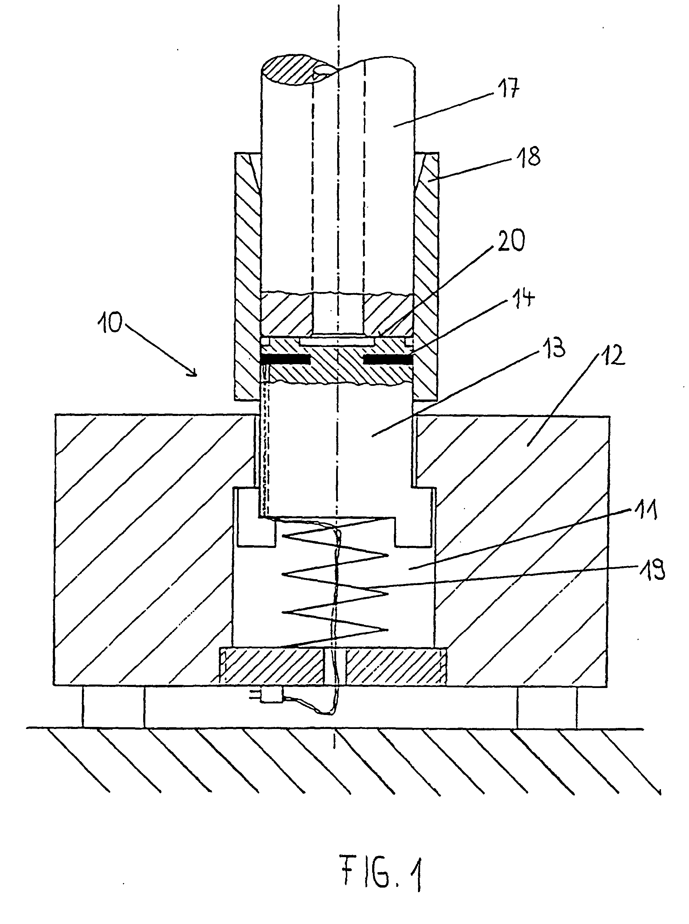

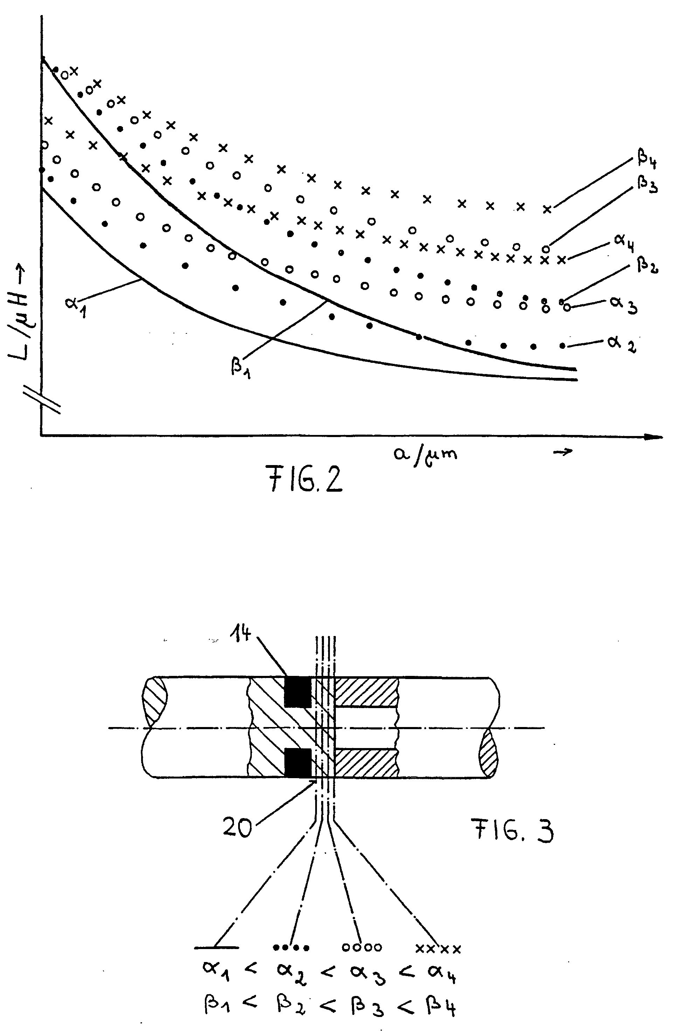

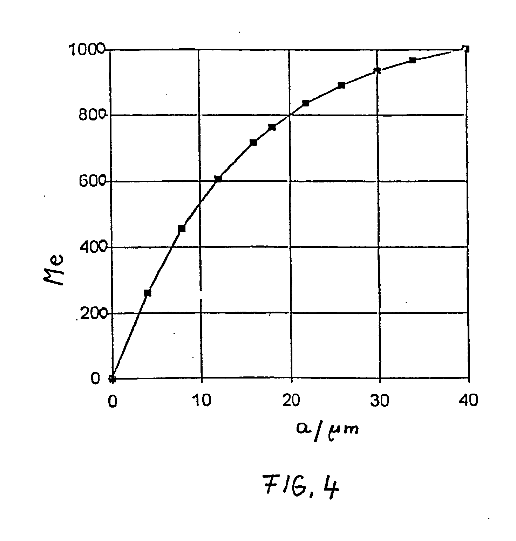

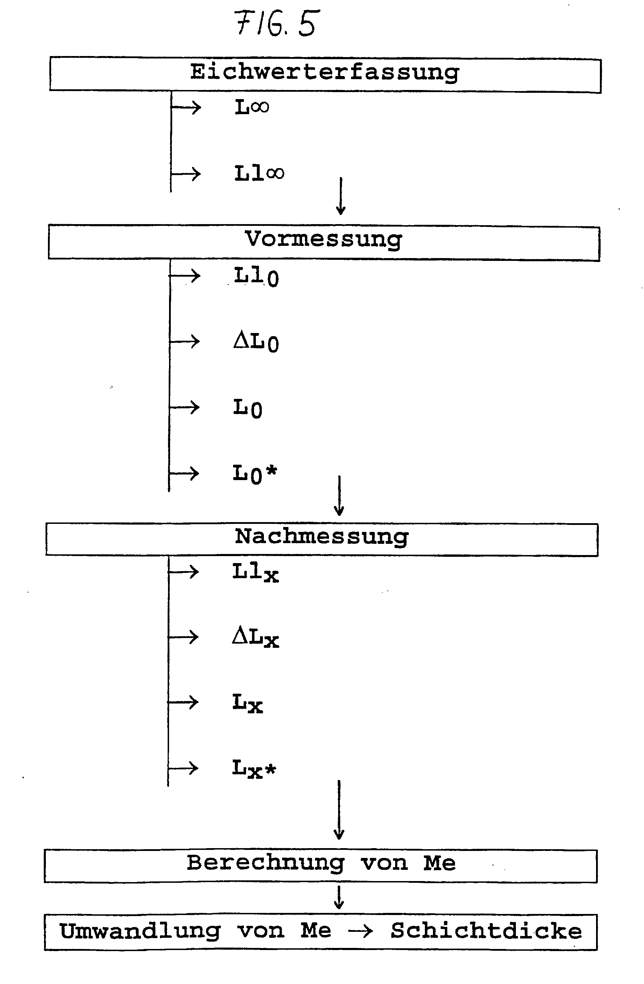

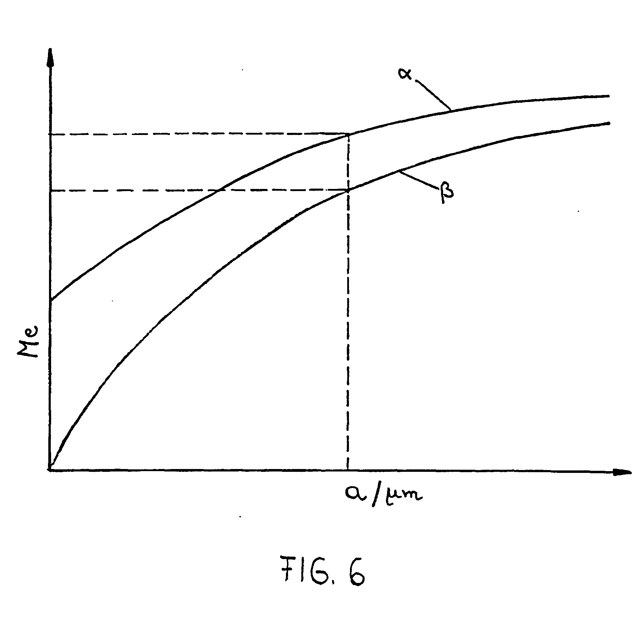

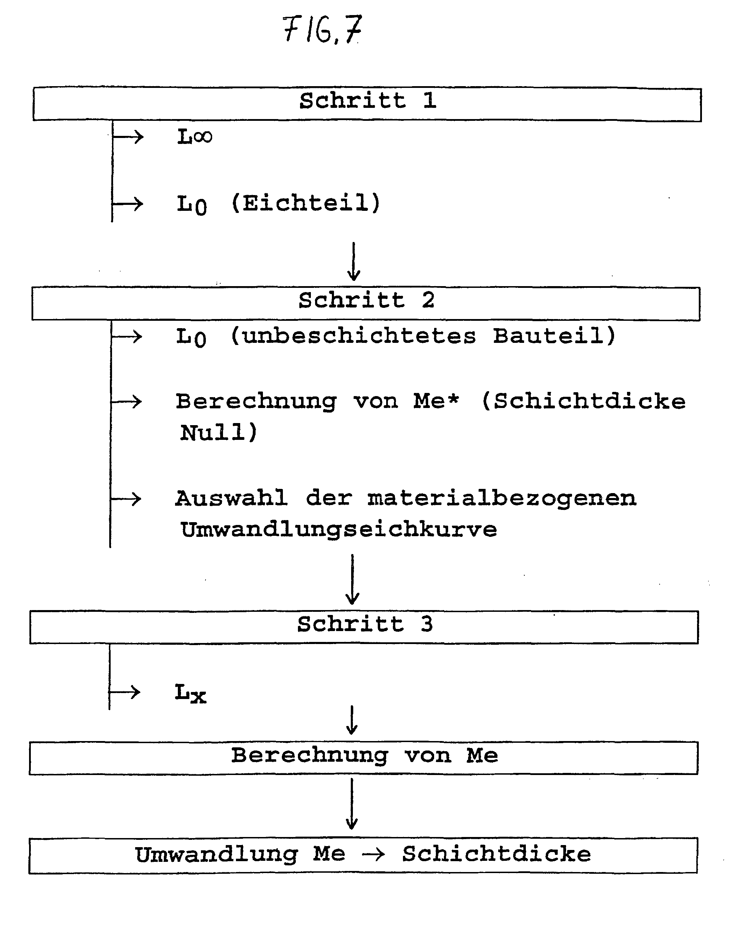

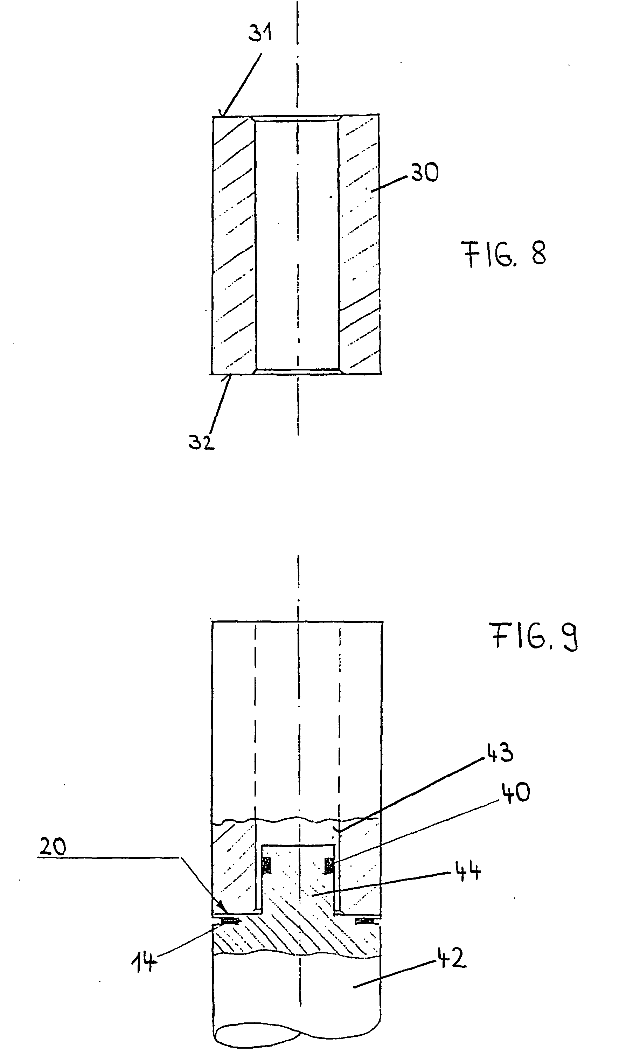

Ein Ausführungsbeispiel der Erfindung ist in der Zeichnung dargestellt und in der nachfolgenden Beschreibung näher erläutert. Die Figur 1 zeigt einen schematischen Aufbau der Meßvorrichtung, in der Figur 2 ist der Verlauf der Induktivität L der Meßspule über die Dicke a der zu bestimmenden Schicht bei unterschiedlichen Abständen und bei unterschiedlicher stofflicher Beschaffenheit $\alpha$ bzw. $\beta$ des sich unter der zu bestimmenden Schicht befindlichen Materials dargestellt. In der Figur 3 ist das Verhältnis der in Figur 2 verwendeten unterschiedlichen Abstände zwischen der Meßspule und dem Meßobjekt dargestellt. Figur 4 zeigt den Verlauf der Normwerte Me über der Schichtdicke a. Figur 5 zeigt ein Blockschaltbild des Verfahrens und Figur 6 den Verlauf der Normwerte Me über der Schichtdicke a. Figur 7 zeigt ein weiteres Blockschaltbild einer Abwandlung des Verfahrens und Figur 8 eine Abwandlung des beim Meßverfahren verwendeten Eichkörpers und Figur 9 eine Abwandlung des beim Meßverfahren verwendeten Meßkörpers.

Beschreibung des Ausführungsbeispiels

Das erfindungsgemäße Meßverfahren beruht auf dem sogenannten Induktiv-Wirbelstrommeßprinzip. In der Figur 1 ist ein dafür verwendeter Sensor 10 konstruktiv dargestellt. Der Sensor 10 ist in der Ausnehmung 11 eines Grundkörpers 12 angeordnet und besteht aus einem Spulenkörper 13 auf dem eine von einem hochfrequenten Wechselstrom, zum Beispiel 4 MHz, durchflossene Spule 14 angebracht ist. Die Spule 14 kann zum Beispiel als Flachspule oder Ringspule ausgebildet sein. Der Spulenkörper 13 besteht vorzugsweise aus elektrisch nicht leitendem und nicht ferromagnetischem Material, zum Beispiel Kunststoff, und wird nahezu reibungsfrei in der Ausnehmung 11 geführt. Das zu überwachende Bauteil 17 ist in einen Führungskörper 18 eingebracht, der das Bauteil 17 und die Spule 14 zueinander positioniert. Mit Hilfe einer Feder 19 wird der Spulenkörper 13 und somit die Spule 14 gegen die Oberfläche 20 des Bauteils 17 gedrückt. Die Oberfläche 20 weist die zu bestimmende Schicht auf. Beim Bauteil 17 kann es sich zum Beispiel um den Stutzen eines Einspritzventils handeln, wobei die Schicht 20 dann eine Chromschicht darstellt. Fließt durch die Spule 14 ein Wechselstrom, so wird ein magnetisches Wechselfeld erzeugt, das sowohl die Chromschicht 20 als auch die darunterliegende Materialschicht aus ferromagnetischem Material des Bauteils 17 durchdringt. In der Chromschicht 20 wirkt dann nur der Wirbelstromeffekt, während im ferromagnetischen Material des Grundkörpers 17 der Induktiv- und Wirbelstromeffekt wirksam sind. Im folgenden werden nun die jeweiligen Meßeffekte einzeln erläutert, die auftreten würden, wenn das jeweilige andere Teil nicht vorhanden wäre. Wird die Spule 14 von einem Wechselstrom durchflossen und erfaßt das magnetische Wechselfeld der Spule nur ein elektrisch gut leitendes aber nicht ferromagnetisches Material, d.h. nur die Chromschicht 20 würde vom magnetischen Wechselfeld der Spule erfaßt, so wirkt nur der sog. Wirbelstromeffekt. Aufgrund der sich in dem elektrisch gut leitenden, aber nicht ferromagnetischen Material ausbildenden Wirbelströme ergibt sich eine Verminderung der Induktivität der Spule 14.

Im folgenden wird nun die Wirkung des magnetischen Feldes der von einem Wechselstrom durchflossenen Spule 14 auf das ihr gegenüberliegende ferromagnetische Material, d.h. auf das Material des Grundkörpers 17 beschrieben. Das magnetische Wechselfeld der von dem Wechselstrom durchflossenen Spule erfaßt das Material des Grundkörpers 17. Es sei darauf hingewiesen, daß bei elektrisch leitendem und ferromagnetischem Material sowohl der ferromagnetische Effekt als auch der Wirbelstromeffekt wirkt. Während der Wirbelstromeffekt eine Verminderung der Induktivität der Meßspule hervorruft, bewirkt der ferromagnetische Effekt eine Erhöhung der Induktivität der Meßspule. Welcher von beiden Effekten überwiegt, ist primär von der Frequenz des Wechselstroms, der die Spule 14 durchfließt, und von der Stoffbeschaffenheit des Grundkörpers 17 abhängig. Überträgt man diese beiden Meßeffekte auf den Grundkörper 17 mit der Chromschicht 20, so läßt sich feststellen, daß je dicker die Chromschicht 20 ist, desto schwächer bildet sich das Magnetfeld aus und damit ist die Induktivität der Spule 14 schwächer. In der Figur 2 ist mit $\alpha 1$ eine entsprechende Meßkurve dargestellt, die den abnehmenden Verlauf der Induktivität der Meßspule 14 über die zunehmende Dicke der Chromschicht 20 darstellt.

Der Verlauf der Meßkurve der Induktivität L über der Schichtdicke a hängt aber von der stofflichen Beschaffenheit des Grundkörpers 17, d.h. zum Beispiel von dem elektrischen Widerstand, der Permeabilität des Materials und vom Abstand zwischen der Spule 14 und der Oberfläche 20, die gemessen werden soll, ab. Verändert sich zum Beispiel bedingt durch Verschmutzungen oder durch Abnutzung des Spulenkörpers der Abstand zwischen der Meßspule 14 und der Chromschicht 20, so ergeben sich unterschiedliche Kennlinien des Verlaufs der Induktivität L über der Schichtdicke a. In der Figur 2 sind hier verschiedene Beispiele dargestellt. Die Kennlinien $\alpha 2$, $\alpha 3$ und $\alpha 4$ stellen hierbei den Verlauf der Induktivität L über der Schichtdicke a bei unterschiedlichem Abstand zwischen der Meßspule und der zu überwachenden Chromschicht aber bei gleicher stofflicher Beschaffenheit des Grundkörpers 17 dar. In der Figur 3 ist hierbei die Größe des Abstandes $\alpha$ zwischen der Spule 14 und der zu überwachenden Chromschicht 20 dargestellt. Es ist ersichtlich, daß der Abstand von $\alpha 1$ zu $\alpha 4$ immer größer wird. Würde man hingegen die stoffliche Beschaffenheit des Materials des Grundkörpers 17 verändern, so würden sich die Kennlinien $\beta 1$ bis $\beta 4$ ergeben. Die Kennlinien $\beta 1$ bis $\beta 4$ bedeuten wiederum eine Variation des Abstands zwischen der Meßspule und der zu überwachenden Chromschicht bei einer zweiten stofflichen Beschaffenheit des Grundkörpers. Aus dem Diagramm nach der Figur 2 ist erkenntlich, daß einem gemessenen Induktivitätswert L eine Vielzahl möglicher Schichtdicken zugeordnet werden kann. Statt der Induktivität kann auch der Wechselstromwiderstandswert der Spule ausgewertet werden.

Das erfindungsgemäße Meßverfahren ermöglicht nun auch eine eindeutige Zuordnung zwischen den gemessenen Induktivitätswerten L der Meßspule 14 und der Dicke a der Chromschicht 20, wenn sich die stoffliche Beschaffenheit des Grundkörpers 17 und/oder der Abstand zwischen der Meßspule 14 und der Oberfläche der zu bestimmenden Chromschicht ändert. Kern des erfindungsgemäßen Verfahrens ist es, eine Normung durchzuführen, die auftretende Meßfehler eliminiert und einen eindeutigen zuordbaren Meßwert ermittelt.

Das erfindungsgemäße Verfahren zur Bestimmung der Dicke einer Schicht wird in mehreren Meß- und Auswerteschritten durchgeführt. Vor der Beschichtung des Grundkörpers 17 wird in einer sog. Vormessung ein Induktivitätswert $L_0$ der Spule 14 ermittelt. Hierbei sitzt die Spule 14 möglichst direkt auf der noch unbeschichteten der Spule zugewandten Oberfläche (Meßfläche) des Grundkörpers 17 auf. Es erfolgt somit nur eine Messung gegenüber dem Material des Grundkörpers 17. Die Größe des Induktivitätswerts $L_0$ hängt von der Beschaffenheit des Grundkörpers ab, insbesondere von dessen magnetischen und elektrischen Eigenschaften. Diese Beschaffenheit des Grundkörpers 17 kann in einer Serienfertigung schwanken. Deshalb ist der Induktivitätswert $L_0$ zu Beginn der Messung für jeden einzelnen Grundkörper 17 zu ermitteln und auch zuordbar in einem Datenspeicher abzuspeichern.

Anschließend wird nun der Grundkörper 17 in einer entsprechenden Beschichtungsanlage mit einer Chromschicht 20 versehen. Danach erfolgt eine zweite Messung, d.h. eine sog. Nachmessung, die an derselben Stelle des Grundkörpers 17 wie die oben erwähnte Vormessung durchgeführt wird. Dabei ergibt sich ein Induktivitätswert $L_X$ der Meßspule 14. Die Größe des Induktivitätswerts $L_X$ wird u.a. von der Dicke der Chromschicht 20 und von der stofflichen Beschaffenheit des Grundkörpers 17 bestimmt. Es ist sicherzustellen, daß beide ermittelten Induktivitätswerte $L_0$ bzw. $L_X$ jeweils eindeutig demselben Grundkörper 17 zuzuordnen sind. Diese beiden Induktivitätswerte $L_0$ bzw. $L_X$ werden nun mit Hilfe eines Algorithmuses in Normwerte umgeformt, d.h. in dimensionslose Kennzahlen, die einer entsprechenden Schichtdicke zuordbar sind. Um diese Normwertbildung durchführen zu können, muß der Induktivitätswert $L_\infty$ ermittelt werden. Diesen Induktivitätswert $L_\infty$ erhält man, wenn an einem Eichkörper eine Messung ausschließlich gegenüber einer Chromschicht durchgeführt wird. Die Oberfläche des Eichkörpers muß dabei eine so dicke Chromschicht aufweisen, daß sie das gesamte Magnetfeld der Spule abschirmt, so daß im ferromagnetischen Grundstoff des Eichkörpers weder der induktive noch der Wirbelstromeffekt sich auswirken kann. Gegebenenfalls könnte beim Eichkörper an Stelle von Chrom auch ein anderer elektrisch leitender, jedoch nicht ferromagnetischer Stoff als Ersatz verwendet werden. Entsprechend der Gleichung 1 wird nun der Normwert Me ermittelt. Der Faktor 1000 kann beliebig zwischen Null und Unendlich variiert werden.

$$(1) \qquad Me = 1000 \cdot \frac{L_x - L_0}{L_\infty - L_0}$$

$Me$ = Meßwert/Normwert
$L_0$ = Induktivitätswert (unbesch. Grundkörper)
$L_x$ = Induktivitätswert (beschichtetes Teil)
$L_\infty$ = Induktivitätswert (Eichkörper aus Chrom)

In der Figur 4 ist nun der Verlauf γ der entsprechend der Gleichung (1) normierten Meßwerte Me über der Schichtdicke a dargestellt. Die verschiedenen in der Figur 2 dargestellten Kurven ergeben einen nahezu zusammenfallenden Verlauf γ der jeweils ermittelten Normwerte Me. Es ist ersichtlich, daß in der Figur 4 gegenüber der Figur 2 eine eindeutige Zuordnung eines Normwerts Me zu einer Dicke der Schicht 20 möglich ist.

Mit Hilfe der Gleichung 1 wurden bisher die Fehler nahezu eliminiert, die durch unterschiedlich große Abstände zwischen der Meßspule und der zu bestimmenden Schicht und durch unterschiedliche magnetische bzw. elektrische Eigenschaften des Materials des Grundkörpers 17 entstehen. Es ist aber auch noch möglich, den Einfluß der unter anderem durch Temperaturschwankungen entstehenden sog. Offsetdrift auf das Meßergebnis zu unterdrücken. Hierzu ist auch der Induktivitätswert der Meßspule zu erfassen, der sich ergibt, wenn die Meßspule ausschließlich gegen Luft mißt, d.h. wenn ihr weder eine Chromschicht noch irgendein Bauteil gegenüberliegt. Dieser Meßwert wird im folgenden als Urluftwert $Ll\infty$ bezeichnet. Er wird ermittelt kurz vor oder nachdem (möglichst zeitgleich) der Induktivitätswert $L\infty$ mit Hilfe eines Eichkörpers ermittelt wird. Dieser Wert $Ll\infty$ stellt einen Basiswert dar, der für die nachfolgenden Messungen jeweils verwendet wird. Während der individuellen Messung des einzelnen Grundkörpers 17 wird kurz vor oder nach der oben erwähnten sog. Vormessung, d.h. möglichst zeitgleich zur Ermittlung des Induktivitätswertes $L_0$ der Spule ein Induktivitätswert $Ll_0$ ermittelt, der entsteht, wenn die Meßspule wiederum gegen Luft mißt. Anschließend erfolgt zum Beispiel in einem Mikrocomputer eine Differenzbildung $\Delta L_0 = Ll_0 - Ll\infty$. Mit Hilfe dieses Wertes $\Delta L_0$ werden nun korrigierte Induktivitätswerte $L_0{}^* = L_0 - \Delta L_0$ errechnet. Sinngemäß ist auch bei der Messung des Induktivitätswertes $L_X$ der korrigierte Meßwert $L_X{}^*$ zu ermitteln. Hierbei wird zeitlich kurz vor oder nach der oben erwähnten sog. Nachmessung, d.h. kurz vor oder nach der Ermittlung des Wertes $L_X$ der Induktivitätswert der Spule gegenüber Luft erfaßt, der mit $Ll_X$ bezeichnet wird. Der Wert der Spule gegenüber Luft ist hier nochmals zu ermitteln, da ein zeitlicher Unterschied und somit eine Temperaturschwankung zwischen der Erfassung des Induktivitätswerts der Spule gegenüber Luft bei der sog. Vormessung und bei der sog. Nachmessung vorhanden sein kann. Der einmal ermmittelte sog. Urluftwert $Ll\infty$ kann sowohl bei der Korrektur des Induktivitätswerts $L_0$ bzw. des Induktivitätswertes $L_X$ über einen längeren Zeitraum verwendet werden. Auch ist es ausreichend, wenn der Induktivitätswert $L\infty$, der den Induktivitätswert einer Messung ausschließlich gegenüber einer Chromschicht darstellt, nur intervallartig aufgenommen wird und für längere Zeit in einer Datenbank gespeichert wird. Wird aber der Induktivitätswert $L\infty$ neu aufgenommen, um z.B. eine langsame und kontinuierliche Veränderung des Abstands zwischen der Meßspule und dem Meßobjekt (z.B. Abrieb) zu berücksichtigen, so ist gleichzeitig auch der sog. Urluftwert $Ll\infty$ zu erneuern. Um nun bei der Normwertbildung auch die offsetdrift des Meßergebnisses, die durch Temperaturschwankungen hervorgerufen wird, zu berücksichtigen, ist die Gleichung 2 zu verwenden.

$$(2) \quad Me = 1000 \cdot \frac{\bigl(Lx - (Ll_x - Ll\infty)\bigr) - \bigl(L_0 - (Ll_0 - Ll\infty)\bigr)}{L\infty \quad - \quad \bigl(L_0 - (Ll_0 - Ll\infty)\bigr)}$$

Bei Austausch eines Sensors müssen der Induktivitätswert $L\infty$ und $Ll\infty$ neu aufgenommen werden. Erfolgt der Austausch zwischen Vor- und Nachmessung muß auch bei der Nachmessung der alte Bezugswert Lloo verwendet werden.

Bei manchen Materialien für den Grundkörper 17 ändern sich über längere Zeitabläufe betrachtet die elektrischen und magnetischen Werte des Materials des Grundkörpers. Diese Veränderung, d.h. Drift, kann bei jedem zu bestimmenden Meßkörper unterschiedlich groß sein, da diese Drift neben der Stoffbeschaffenheit auch von der individuellen Wärmebehandlung, die vor dem Verchromen erfolgt, abhängt. Für die Aufnahme von Justierkennlinien, siehe Fig. 4, werden deshalb Eichkörper, wie sie in der Figur 8 dargestellt sind, hergestellt. Der Eichkörper 30 weist zwei Stirnflächen 31 und 32 auf. Die Meßfläche 31 besteht hier aus dem unbeschichteten Grundstoff und die Meßfläche 32 ist mit der Chromschicht versehen. Beide Meßflächen 31 und 32 sind aber formgleich. Die Dicke der Chromschicht, die auf die Meßfläche 32 aufgebracht ist, ist bekannt. Der bei der Eichung mit diesem Eichkörper 30 ermittelte Normwert ändert sich nicht oder nur unwesentlich, auch wenn sich die elektrischen und magnetischen Eigenschaften des Grundstoffes, bedingt durch Alterungsprozesse verändern. Vorausgesetzt ist hierbei eine homogene Änderung der magnetischen und elektrischen Eigenschaften des Grundstoffs über den gesamten Eichkörper.

Im folgenden werden die einzelnen Meß- und Berechnungsschritte nochmals anhand des Diagramms nach Figur 5 aufgelistet. Das Meßverfahren läuft, wie erläutert grob, in drei Schritten ab, einer sog. Eichwerterfassung, einer sog. Vormessung und einer sog. Nachmessung. In der Eichwerterfassung wird der Induktivitätswert $L\infty$ erfaßt, der ausschließlich gegenüber dem Material (bzw. dessen Ersatzstoff) bestimmt wird, dessen Dicke ermittelt wird, wobei die Stärke des Eichkörpers vorzugsweise größer als die Eindringtiefe des magnetischen Wechselfeldes der Meßspule ist. Anschließend wird der Induktivitätswert $Ll\infty$ ermittelt, der den Induktivitätswert der Meßspule gegenüber Luft möglichst im Zeitpunkt der Erfassung des Werts $L\infty$ darstellt.

Nun beginnt der sog. Vormessungsabschnitt.

3. Erfassung des aktuellen Induktivitätswerts der Spule gegenüber Luft $Ll_0$
4. Differenzbildung $\Delta L_0 = Ll_0 - Ll\infty$.
5. Ermittlung des Induktivitätswertes $L_0$, d.h. des Induktivitätswerts gegenüber dem unbeschichteten Grundkörper.
6. Ermittlung des korrigierten Werts $L_0^*$ entsprechend der Differenzbildung $L_0^* = L_0 - \Delta L_0$

Nun folgen die Berechnungsschritte der sog. Nachmessung:

7. Ermittlung des Induktivitätswerts der Spule gegenüber Luft $Ll_X$
8. Bilde die Differenz $\Delta L_X = Ll_X - Ll\infty$
9. Ermittlung des Induktivitätswerts $L_X$
10. Ermittlung des korrigierten Wertes $L_X^*$ durch Differenzbildung: $L_X^* = L_X - \Delta L_X$
11. Durchführung der Normwertberechnung entsprechend der Gleichung mit den Werten $L\infty$, und $L_X^*$ bzw $L_0^*$
12. Umwandlung des unter 11 ermittelten Normwertes in eine Schichtdicke mit Hilfe einer Eichkurve.

In einer Abwandlung des Verfahrens wird der Induktivitätswert $L_0$ nicht mehr bei jedem einzelnen Bauteil individuell gegenüber diesem ermittelt, sondern nun mit Hilfe eines Eichelements gemessen und abgespeichert. Dieses Justierteil darf aber seine elektrischen und magnetischen Eigenschaften während der Betriebsdauer der Anlage nicht verändern. Der Induktivitätswert $L\infty$ wird wie oben beschrieben ermittelt. Im folgenden werden nun die Meßschritte entsprechend Figur 7 dargelegt, wobei zur Vereinfachung und aus Übersichtlichkeitsgründen die Korrektur der Drift der Temperatur nicht berücksichtigt ist. Für diese Abwandlung des Verfahrens ist es erforderlich, für jedes Material eine eigene Umwandlungseichkurve entsprechend Figur 6 aufzunehmen, die mit den gleichen unter Schritt 1 verwendeten Eichelementen aufgenommen sind.

Schritt 1

1. Aufnahme des Induktivitätswerts $L\infty$ und Speicherung in Datenbank
2. Aufnahme des Induktivitätswertes $L_0$ gegenüber einem Eichelement und Speicherung in Datenbank.

Schritt 2

3. Ermittlung des Induktivitätswerts $L_0$ an einem unbeschichteten Bauteil
4. Errechnung des Normwerts Me mit Hilfe der Gleichung 1 bei Schichtdicke Null.
5. Auswahl der materialbezogenen Umwandlungseichkurve gemäß Figur 6.

Schritt 3

6. Ermittlung des Induktivitätswertes $L_X$ an einem beschichteten Bauteil
7. Berechnung des Normwertes mit Hilfe der Gleichung 1
8. Umsetzung der Normwerte in Schichtdickenwerte mit Hilfe einer ausgewählten Eichkurve.

Anzumerken ist, daß bei dem Verfahren gegenüber dem beim Stand der Technik verwendeten Wirbelstromverfahren bzw. Induktivverfahren die Meßspule von einem hochfrequenten Wechselstrom, z.B. 4 MHz durchflossen wird. Dabei ergeben sich kleinere Spuleninduktivitäten. Es ist kein Spulenkern erforderlich, so daß eine variable und preiswerte Bauweise möglich ist.

Durch Einsatz eines sog. Multiplexers ist es möglich, viele Meßteile in kurzer Zeit vermessen zu können. Hierbei sind viele Meßspulen gleichzeitig den zu bestimmenden Meßflächen zugeordnet. Kurzzeitig nacheinander werden von einer Meßbrücke mittels des Multiplexers diese Meßflächen abgetastet. Dies ist möglich, auch wenn mit der oben erwähnten hohen Meßfrequenz von z.B. 4 MHz die Induktivitätswerte ermittelt werden.

In der Figur 9 ist eine weitere Ausgestaltung der konstruktiven Anordnung nach Figur 1 dargestellt. Die im Verfahren beschriebene Erfassung des Induktivitätswerts $L_0$ (Messung der Spule gegenüber unbeschichtetem Bauteil) kann auch mit einer separaten zweiten Meßspule 40 erfolgen. Hierzu muß nach der Verchromung, d.h. nach Aufbringen der Schicht, deren Dicke zu messen ist, auf der Oberfläche des zu überwachenden Bauteils noch eine nicht beschichtete Zone vorhanden sein. Bei dem in der Figur 9 dargestellten Bauteil 41 ragt ein Fortsatz 44 des Spulenkörpers 42 in eine Bohrung 43 des Bauteils 41. Die Wandung der Bohrung 43 ist hierbei nicht mit der zu bestimmenden Chromschicht bedeckt. Mit Hilfe der Spule 40 kann nun die elektrische und magnetische Eigenschaft des Grundkörpers ermittelt werden, während gleichzeitig mit Hilfe der Meßspule 14 eine Messung gegenüber der zu bestimmenden Chromschicht erfolgen kann. Mit Hilfe dieses Sensors ist es möglich, daß das Bauteil nur einmal auf dem Sensor positioniert werden muß, so daß eine noch kürzere Taktzeit entsteht.

**Patentansprüche**

1. Verfahren zur Bestimmung einer Dicke einer Schicht (20) aus elektrisch leitendem Material, die auf einem Körper (17) aus ferromagnetischem Material aufgebracht ist, mit Hilfe mindestens einer von einem hochfrequenten Wechselstrom durchflossenen Messspule (14), deren Induktivitätsänderung ausgewertet wird, wobei folgende Messschritte ablaufen:

   - Ermittlung des Induktivitätswerts $L\infty$ der Spule (14) bei einer Messung ausschließlich gegenüber einer Schicht aus dem elektrisch leitenden Material
   - Ermittlung des Induktivitätswertes $L_0$ der Spule (14) bei einer Messung ausschließlich gegenüber einem Körper aus dem ferromagnetischen Material
   - Ermittlung des Induktivitätswertes $L_x$ der Spule (14) bei einer Messung gegenüber der zu bestimmenden Schicht (20)
   - Umwandlung der Induktivitätswerte $L\infty$, $L_0$ und $L_x$ in einen dimensionslosen Wert $M_e$
   - Umwandlung des Werts $M_e$ mit Hilfe einer Eichkurve in einen Schichtdickenwert.

2. Verfahren nach Anspruch 1, **dadurch gekennzeichnet, daß** der dimensionslose Wert $M_e$ mit Hilfe der Gleichung ermittelt wird:

$$Me = A \cdot \frac{L_x - L_0}{L_\infty - L_0}$$

   $L_0$ = Induktivitätswert unbesch. Grundkörper
   $L_x$ = Induktivitätswert beschichtetes Teil
   $L_\infty$ = Induktivitätswert ausschließlich gegenüber Schicht
   A = Faktor

3. Verfahren nach Anspruch 1 und 2, **dadurch gekennzeichnet, daß** der Induktivitätswert $L_0$ gegenüber einem Eichteil ermittelt wird, daß ein Normwert $M_e$ bei einer Schichtdicke Null gebildet wird, mit dem die zugehörige Umwandlungskurve ausgewählt wird.

4. Verfahren nach einem der Ansprüche 1 bis 3, **dadurch gekennzeichnet, daß** der dimensionslose Wert $M_e$ mit Hilfe der Gleichung ermittelt wird:

$$(2) \quad Me = A \cdot \frac{\left(L_x - \left(Ll_x - Ll\infty\right)\right) - \left(L_0 - \left(Ll_0 - Ll\infty\right)\right)}{L\infty \quad - \quad \left(L_0 - \left(Ll_0 - Ll\infty\right)\right)}$$

$Ll_X$:     Induktivitätswert gegenüber Luft vor oder oder nach der Erfassung von $L_X$
$Ll_0$:     Induktivitätswert gegenüber Luft vor oder oder nach der Erfassung von $L_0$
$Ll\infty$:     Induktivitätswert gegenüber Luft vor oder oder nach der Erfassung von $L_\infty$

5. Verfahren nach einem der Ansprüche 1 bis 4, **dadurch gekennzeichnet, daß** eine Ermittlung des Induktivitätswerts $L_0$ und des Induktivitätswerts $L_x$ an einem Eichkörper (30) mit homogener Materialzusammensetzung erfolgt.

6. Verfahren nach einem der Ansprüche 1 bis 5, **dadurch gekennzeichnet, daß** der Induktivitätswert $L_0$ und der Induktivitätswert $L_x$ mit Hilfe jeweils einer eigenen Meßspule (14, 40) nahezu gleichzeitig ermittelt wird.

## Claims

1. Process for determining a thickness of a layer (20) of electroconductive material which is applied to a body (17) of ferromagnetic material, with the aid of at least one measuring coil (14) through which a high frequency alternating current flows and whose inductance change is evaluated, the following measuring steps proceeding:

   - determination of the inductance $L\infty$ of the coil (14) during a measurement exclusively with respect to a layer of the electroconductive material

   - determination of the inductance $L_0$ of the coil (14) during a measurement exclusively with respect to a body of the ferromagnetic material

   - determination of the inductance $L_x$ of the coil (14) during a measurement with respect to the layer (20) to be determined

   - conversion of the inductances $L\infty$, $L_0$ and $L_x$ into a dimensionless value $M_e$

   - conversion of the value $M_e$ into a layer thickness value with the aid of a calibration curve.

2. Process according to Claim 1, **characterized in that** the dimensionless value $M_e$ is determined with the aid of the equation:

$$Me = A \cdot \frac{L_x - L_0}{L\infty - L_0}$$

   $L_0$ = Inductance of uncoated base body
   $L_x$ = Inductance of coated part
   $L\infty$ = Inductance exclusively with respect to layer
   $A$ = factor

3. Process according to Claims 1 and 2, **characterized in that** the inductance $L_0$ is determined with respect to a calibration part, **in that** a normalized value $M_e$ at zero layer thickness is formed, with which the associated conversion curve is selected.

4. Process according to one of Claims 1 to 3, **characterized in that** the dimensionless value $M_e$ is determined with the aid of the equation:

$$(2) \quad Me = A \cdot \frac{(L_x - (Ll_x \cdot Ll\infty)) - (L_o - (Ll_o - Ll\infty))}{L\infty - (L_o - (Ll_o - Ll\infty))}$$

$Ll_x$ : Inductance with respect to air before or after the registration of $L_x$
$Ll_0$ : Inductance with respect to air before or after the registration of $L_0$
$Ll_\infty$ : Inductance with respect to air before or after the registration of $L\infty$

5. Process according to one of Claims 1 to 4, **characterized in that** a determination of the inductance $L_0$ and of the inductance $L_x$ is carried out on a calibration body (30) with a homogeneous material composition.

6. Process according to one of Claims 1 to 5, **characterized in that** the inductance $L_0$ and the inductance $L_x$ are determined virtually simultaneously with the aid of a dedicated measuring coil (14, 40) in each case.

**Revendications**

1. Procédé pour déterminer l'épaisseur d'une couche (20) de matériau électro-conducteur qui est disposée sur un corps (17) de matière ferromagnétique, à l'aide d'au moins une bobine de mesure (14) parcourue par un courant alternatif en haute fréquence dont la modification d'inductance est exploitée, comprenant les étapes de mesure suivantes :

   - calcul de l'inductance spécifique $L\infty$ de la bobine (14) par une mesure exclusivement sur une couche du matériau électro-conducteur,
   - calcul de l'inductance spécifique Lo de la bobine (14) par une mesure exclusivement sur un corps du matériau ferromagnétique,
   - calcul de l'inductance spécifique $L_X$ de la bobine (14) par une mesure sur la couche à déterminer (20),
   - conversion des inductances spécifiques $L\infty$, $L_0$ et Lx en une valeur sans dimension $M_e$,
   - conversion de la valeur $M_e$ à l'aide d'une courbe étalon en une valeur d'épaisseur de couche.

2. Procédé selon la revendication 1,
   **caractérisé en ce que**
   la valeur sans dimension $M_e$ est obtenue à l'aide de l'équation :

$$M_e = A. \frac{L_x - L_0}{L\infty - L_0}$$

   $L_0$ = Inductance spécifique du corps de base non recouvert d'une couche,
   Lx = Inductance spécifique d'une partie recouverte d'une couche,
   $L\infty$ = Inductance spécifique exclusivement sur la couche,
   A = Facteur.

3. Procédé selon la revendication 1 ou 2,
   **caractérisé en ce que**
   l'inductance spécifique $L_0$ est obtenue sur une partie étalon, et on forme pour une épaisseur de couche nulle, une valeur étalon $M_e$ avec laquelle on sélectionne la courbe de conversion correspondante.

4. Procédé selon une des revendications 1 à 3,
   **caractérisé en ce que**
   la valeur sans dimension $M_e$ est obtenue à l'aide de l'équation :

$$M_e = A \frac{(L_x - (Llx - Ll\infty)) - (L_0 - (Ll_0 - Ll\infty))}{L\infty - (L_0 - (Ll_0 - Ll\infty))} \qquad (2)$$

$LI_x$ = Inductance spécifique sur l'air avant ou après l'enregistrement de $L_x$,

$LI_0$ = Inductance spécifique sur l'air avant ou après l'enregistrement de $L_0$,

$LI_\infty$ = Inductance spécifique sur l'air avant ou après l'enregistrement de $L_\infty$.

5. Procédé selon une des revendications 1 à 4.
   **caractérisé en ce qu'**
   un calcul de l'inductance spécifique $L_0$ et de l'inductance spécifique $L_x$ est obtenu sur un corps étalon (30) avec une composition de matériau homogène.

6. Procédé selon une des revendications 1 à 5,
   **caractérisé en ce que**
   l'inductance spécifique $L_0$ et l'inductance spécifique $L_x$ sont obtenues presque en même temps respectivement à l'aide d'une bobine de mesure (14, 40) propre.

FIG. 1

FIG. 2

FIG. 3

$$\alpha_1 < \alpha_2 < \alpha_3 < \alpha_4$$
$$\beta_1 < \beta_2 < \beta_3 < \beta_4$$

FIG. 4

## FIG. 5

| Eichwerterfassung |
|---|

$\mapsto \quad L\infty$

$\mapsto \quad L1\infty$

| Vormessung |
|---|

$\mapsto \quad L1_0$

$\mapsto \quad \Delta L_0$

$\mapsto \quad L_0$

$\mapsto \quad L_0^*$

| Nachmessung |
|---|

$\mapsto \quad L1_x$

$\mapsto \quad \Delta L_x$

$\mapsto \quad L_x$

$\mapsto \quad L_x^*$

| Berechnung von Me |
|---|

| Umwandlung von Me $\rightarrow$ Schichtdicke |
|---|

FIG. 6

## FIG. 7

| Schritt 1 |
|---|

$\mapsto$ L$\infty$

$\mapsto$ L$_0$ (Eichteil)

↓

| Schritt 2 |
|---|

$\mapsto$ L$_0$ (unbeschichtetes Bauteil)

$\mapsto$ Berechnung von Me* (Schichtdicke Null)

$\mapsto$ Auswahl der materialbezogenen Umwandlungseichkurve

↓

| Schritt 3 |
|---|

$\mapsto$ L$_x$

↓

| Berechnung von Me |
|---|

↓

| Umwandlung Me → Schichtdicke |
|---|

FIG. 8

FIG. 9